(19) **Europäisches Patentamt**
**European Patent Office**
**Office européen des brevets**

(11) **EP 4 678 605 A1**

(12) **EUROPEAN PATENT APPLICATION**
published in accordance with Art. 153(4) EPC

(43) Date of publication:
**14.01.2026 Bulletin 2026/03**

(21) Application number: **24770734.2**

(22) Date of filing: **07.03.2024**

(51) International Patent Classification (IPC):
***C03C 1/02*** (2006.01)      ***C03B 3/02*** (2006.01)

(52) Cooperative Patent Classification (CPC):
**C03B 3/02; C03C 10/00**

(86) International application number:
**PCT/JP2024/008897**

(87) International publication number:
**WO 2024/190628 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023 JP 2023037656**

(71) Applicant: **AGC INC.**
**Chiyoda-ku,**
**Tokyo 1008405 (JP)**

(72) Inventor: **HANAWA, Yu**
**Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING GLASS**

(57) The present invention provides a method for producing glass that can suitably remove unnecessary substances and unnecessary components from glass that contains foreign matter, etc., or glass that contains colored components or unnecessary components, so that high-quality glass having a low incidence of manufacturing defects and unnecessary coloration is obtained. The method for producing glass of the present invention includes: melting a glass-containing raw material to obtain a first melt; subjecting the first melt to reduction treatment, and causing a metal phase to precipitate; separating at least part of the metal phase from the first melt and obtaining a second melt; and subjecting the second melt to an oxidation treatment.

EP 4 678 605 A1

**Description**

TECHNICAL FIELD

The present invention relates to a glass production method.

BACKGROUND ART

From the viewpoint of resource recycling and greenhouse gas reduction, recycling of a glass product is desired. However, at present, most of discarded glass products and some of defective glasses generated in an intermediate step are discarded without being recycled.
The reason is, for example, as follows.

(1) When a glass mixed with a foreign substance (hereinafter, also referred to as an external foreign substance) such as a metal, a ceramic, or an organic substance is charged into a melting furnace, various defects in production are generated, and thus it is difficult to recycle the glass.
(2) Since colored glasses include glasses having various colors and it is difficult to individually collect the glasses, once the glasses are mixed with each other, it is difficult to horizontally recycle the glasses to the same colored glass as before recycling.
(3) Since a solar panel (hereinafter, also referred to as a PV panel) glass contains Sb, the glass is colored in a float bath, and thus it is difficult to recycle the glass to a plate glass by a float method.

That is, in the case where a waste glass or a defective glass contains an external foreign substance or the glass contains a coloring component or an unnecessary component, even when an attempt is made to produce a glass using the above as a raw material, the glass to be obtained may have a defect in production or unnecessary coloring.
With respect to this, for example, Non Patent Literature 1 discloses that a phase separation phenomenon of an alkali-containing borosilicate glass is used for a method for removing a Fe component, which is a coloring component, in a glass.

CITATION LIST

NON-PATENT LITERATURE

Non Patent Literature 1: Takuya Imaoka and three others, "Material Recycling of Municipal Waste Slags by Using Phase Separation of Glass", Journal of The Faculty of Environmental Science and Technology, Okayama University, 12(1), (2007) 161-165.

SUMMARY OF INVENTION

TECHNICAL PROBLEM

However, in the case of removing the coloring component or the like in the glass using the phase separation phenomenon as described in Non Patent Literature 1, the step is complicated, and the efficiency may be poor. In addition, useful components such as an alkali metal component are also removed at the same time.
In view of the above, an object of the present invention is to provide a glass production method capable of appropriately removing an unnecessary substance or an unnecessary component from a glass containing an external foreign substance or a glass containing a coloring component or an unnecessary component, and obtaining a high quality glass having few defects in production and reduced unnecessary coloring, even without using the phase separation phenomenon described in Non Patent Literature 1.

SOLUTION TO PROBLEM

That is, the present invention relates to the following 1 to 11.

1. A glass production method for obtaining a glass from a glass-containing raw material, the method including:

obtaining a first melt by melting the glass-containing raw material;
precipitating a metal phase by subjecting the first melt to a reduction treatment;

obtaining a second melt by separating at least a part of the metal phase from the first melt; and
subjecting the second melt to an oxidation treatment.

2. The glass production method according to the above 1, in which in the reduction treatment, at least one selected from the group consisting of a simple substance and a compound that contain at least one element selected from the group consisting of C, Al, Si, Ca, Ti, and H, and a mixture containing the simple substance and the compound is used as a reducing agent.

3. The glass production method according to the above 2, in which the reducing agent contains at least one selected from the group consisting of a simple substance and a compound that contain at least one element selected from the group consisting of C, Si, and H, and a mixture containing the simple substance and the compound.

4. The glass production method according to the above 1, in which a treatment temperature in the reduction treatment is 1,300°C to 1,800°C.

5. The glass production method according to the above 1, in which an oxidizing gas is used as an oxidizing agent in the oxidation treatment.

6. The glass production method according to the above 5, in which a gas containing $O_2$ is used as the oxidizing agent.

7. The glass production method according to the above 1, further including:

adjusting a viscosity of the first melt at a temperature in the reduction treatment to 0.1 dPa·s to 100,000 dPa·s.

8. The glass production method according to the above 1, in which a glass to be obtained has a visible light transmittance Tv of 50% to 92% at a thickness of 2 mm.

9. The glass production method according to the above 1, in which

the glass-containing raw material contains at least one element M selected from the group consisting of Fe, Co, Cr, Ni, Sb, Zn, Mn, Sn, Bi, Pb, Ag, Cu, W, and Nb, and
when a concentration of the element M in the glass-containing raw material in terms of mass% or ppm by mass based on oxides is defined as $[MO]_{before}$ and a concentration of the element M in a glass to be obtained in terms of mass% or ppm by mass based on oxides is defined as $[MO]_{after}$, a value of X represented by the following formula is 0.01 to 0.85,

X = (total of ($[MO]_{after}/[MO]_{before}$) for each kind of element M contained in glass-containing raw material)/ (number of kinds of elements M contained in glass-containing raw material).

10. The glass production method according to the above 1, in which a glass to be obtained has a concentration of $Fe_2O_3$ of 0.001% to 0.5% in terms of mass% based on oxides.

11. The glass production method according to the above 1, in which

in terms of mass% based on oxides,
a ratio $NWF_{after/before}$ is 0.40 to 1.50, the ratio $NWF_{after/before}$ being a ratio of a total content of a network former oxide in a glass to be obtained to a total content of the network former oxide in the glass-containing raw material, and
a ratio $NWM_{after/before}$ is 0.60 to 2.00, the ratio $NWM_{after/before}$ being a ratio of a total content of a network modifier oxide in the glass to be obtained to a total content of the network modifier oxide in the glass-containing raw material.

## ADVANTAGEOUS EFFECTS OF INVENTION

According to the glass production method of the present invention, even without using a complicated phase separation phenomenon, an unnecessary substance or an unnecessary component can be appropriately removed from a glass containing an external foreign substance or a glass containing a coloring component or an unnecessary component, and it is possible to obtain a high quality glass having few defects in production and reduced unnecessary coloring. According to the present production method, various waste glass products, defective glass, and the like containing an unnecessary substance and an unnecessary component can be suitably recycled.

## DESCRIPTION OF EMBODIMENTS

Hereinafter, the present invention is described in detail, but the present invention is not limited to the following embodiment, and can be freely modified and implemented without departing from the gist of the present invention.
In the present description, "to" indicating a numerical range is used in the sense of including the numerical values set forth before and after the "to" as a lower limit value and an upper limit value. Moreover, in the present description, "mass" is synonymous with "weight".

(Glass Production Method)

A glass production method according to an embodiment of the present invention (hereinafter, also referred to as the present production method) is a glass production method for obtaining a glass from a glass-containing raw material, and includes the following steps (i) to (iv).

Step (i): obtaining a first melt by melting a glass-containing raw material.
Step (ii): precipitating a metal phase by subjecting the first melt to a reduction treatment.
Step (iii): obtaining a second melt by separating at least a part of the metal phase from the first melt.
Step (iv): subjecting the second melt to an oxidation treatment.

The present inventor has found that in a glass containing an external foreign substance or a glass containing a coloring component or an unnecessary component, when a melt thereof is subjected to a reduction treatment, impurity elements derived from the external foreign substance, the coloring component, or the unnecessary component can be precipitated as a metal phase and separated from the melt. However, according to the study of the present inventor, it has been found that in the case where the precipitated metal phase is separated from the melt, the metal phase in a fine particle state remains in the melt although a certain amount of impurity elements are removed, and the fine metal particles become defects in the glass to be obtained. Therefore, the present inventor has found that, by further performing an oxidation treatment on the melt in which the metal phase in a fine particle state remains, the metal phase in a fine particle state is oxidized and contained in the glass in an oxide state (that is, fine particles are eliminated), and thus, it is possible to obtain a high quality glass having few defects derived from impurity elements, reduced unnecessary coloring derived from impurity elements, and few defects derived from fine metal particles. Thus, the present invention has been completed.

[Step (i)]

In the step (i), a glass-containing raw material is melted to obtain a first melt.

(Glass-containing Raw Material)

The glass-containing raw material is not particularly limited, and examples thereof include a raw material containing, for example, a glass containing an external foreign substance, a glass containing a coloring component or an unnecessary component, or the like.
Examples of the glass containing an external foreign substance include a mixture containing a glass and a substance other than the glass, a mixture of a plurality of glasses having different main compositions, and a composite in which a substance other than a glass adheres to the glass. Here, the main composition means a composition of a main oxide constituting the glass, and specifically means, for example, a composition of a network former oxide such as $SiO_2$, $Al_2O_3$, $B_2O_3$, and $P_2O_5$, or a network modifier oxide such as an alkaline earth metal oxide and an alkali metal oxide. The external foreign substance is not particularly limited, and examples thereof include a metal, a ceramic, an organic substance, and a composite material containing an organic substance and an inorganic substance. Representative examples thereof are shown below. Examples of the metal include cast iron, stainless steel, aluminum, copper, silver, silicon, lead, zinc, tin, solder, and a heat wire (mainly containing Ag as a main component) to be applied to an automobile window glass. Examples of the ceramic include concrete, cement, ceramics, a heat-resistant board, a black ceramic print (commonly called black enamel) to be applied to an automobile window glass, and a drying agent such as zeolite to be used in an insulating glass. Examples of the organic substance include a sealing material, an interlayer, paper, wood, a plastic, and a bottle label seal. Examples of the composite material containing an organic substance and an inorganic substance include a base material to be used for a printed circuit board, and a fiber reinforced plastic.
According to the present production method, since an impurity element, which is derived from these external foreign substances, contained in the first melt can be suitably removed, defects of the glass to be obtained can be reduced, and a high quality glass can be obtained. Note that, in the case where the external foreign substance is, for example, an organic substance, an impurity derived therefrom is not necessarily separated as a metal phase in the step (ii). However, as to be described later, according to the present production method, defects derived from the organic substance can also be reduced.
First, most of the organic substance is gasified and removed by burning in the melting process in the step (i). On the other hand, a part thereof remains in the melt as a residual carbon component and acts as a reducing agent for reducing the glass. It is thought that such a residual carbon component, if left as it is, will lead to defects. However, a degree of reduction by the residual carbon component is smaller than that in a reduction treatment step in the subsequent step (ii), and the influence can be completely eliminated by an oxidation treatment in the step (iv). Therefore, according to the present production method, the defects derived from the organic substance can also be reduced.

In the case where the glass-containing raw material contains the external foreign substance, a content of the external foreign substance in the glass-containing raw material is, for example, preferably 0.1 ppm by mass or more, more preferably 1 ppm by mass or more, and still more preferably 10 ppm by mass or more, from the viewpoint of suitably obtaining effects of the present invention. On the other hand, the content of the external foreign substance in the glass-containing raw material is preferably 100,000 ppm by mass or less, more preferably 50,000 ppm by mass or less, and still more preferably 30,000 ppm by mass or less, from the viewpoint of improving the quality of the glass to be finally obtained. That is, the content of the external foreign substance in the glass-containing raw material is preferably in the range of 0.1 ppm by mass to 100,000 ppm by mass.

Examples of the impurity element derived from the external foreign substance, the coloring component, or the unnecessary component include Fe, Co, Cr, Ni, Sb, Zn, Mn, Sn, Bi, Pb, Ag, Cu, W, and Nb. These elements tend to be reduced more easily than the main component of the glass. According to the present production method, since these impurity elements contained in the first melt can be suitably removed, the coloring of the glass to be obtained can be reduced, and a glass having excellent transparency can be obtained. Hereinafter, the "impurity element" in the present description means at least one element selected from the group consisting of Fe, Co, Cr, Ni, Sb, Zn, Mn, Sn, Bi, Pb, Ag, Cu, W, and Nb. The impurity element is preferably at least one element selected from the group consisting of Fe, Co, Cr, Ni, and Sb.

In the case where the glass-containing raw material contains the impurity element, the content thereof preferably satisfies any one or more of the following (1) to (14) when a composition of the glass-containing raw material is expressed in terms of mass% or ppm by mass based on oxides. In such a case, it can be said that the glass-containing raw material contains an impurity element to some extent, and the effects of the present production method can be suitably obtained. Note that, in the present description, the composition of the glass-containing raw material refers to an average composition of a whole composition including the case where the glass-containing raw material is a mixture or a composite containing an external foreign substance. The composition of the glass-containing raw material can be measured by appropriately selecting the method described in JIS K0050:2019 "General rules for chemical analysis". It is preferable to melt the glass-containing raw material in the atmosphere, and to subject the obtained composition to X-ray fluorescence analysis (XRF), analysis using an electron probe microanalyzer (EPMA), ICP optical emission spectrometry, or ICP mass spectrometry, since the average composition of a whole composition can be relatively easily measured.

(1) $Fe_2O_3$: 0.001 mass% or more
(2) CoO: 1 ppm by mass or more
(3) $Cr_2O_3$: 1 ppm by mass or more
(4) NiO: 1 ppm by mass or more
(5) $Sb_2O_3$: 1 ppm by mass or more
(6) ZnO: 1 ppm by mass or more
(7) MnO: 1 ppm by mass or more
(8) $SnO_2$: 1 ppm by mass or more
(9) $Bi_2O_3$: 1 ppm by mass or more
(10) PbO: 1 ppm by mass or more
(11) $Ag_2O$: 1 ppm by mass or more
(12) CuO: 1 ppm by mass or more
(13) $WO_3$: 1 ppm by mass or more
(14) $Nb_2O_5$: 1 ppm by mass or more

In the present production method, while the glass-containing raw material containing a certain amount of the impurity element is suitable, the content of the impurity element is preferably not too large in consideration of the quality of the glass to be finally obtained. From this viewpoint, in the glass-containing raw material, the content of $Fe_2O_3$ is preferably 5 mass% or less, and more preferably 3 mass% or less. In addition, among the impurity elements, the content of each of the elements other than Fe is preferably 10,000 ppm by mass or less, and more preferably 5,000 ppm by mass or less in ppm by mass based on oxides. For example, as the content of the impurity element in the case where the glass-containing raw material contains the impurity element, it is more preferable to satisfy any one or more of the following (1)' to (14)' in terms of mass% or ppm by mass based on oxides.

(1)' $Fe_2O_3$: 0.001 mass% to 5 mass%
(2)' CoO: 1 ppm by mass to 10,000 ppm by mass
(3)' $Cr_2O_3$: 1 ppm by mass to 10,000 ppm by mass

(4)' NiO: 1 ppm by mass to 10,000 ppm by mass

(5)' $Sb_2O_3$: 1 ppm by mass to 10,000 ppm by mass

(6)' ZnO: 1 ppm by mass to 10,000 ppm by mass

(7)' MnO: 1 ppm by mass to 10,000 ppm by mass

(8)' $SnO_2$: 1 ppm by mass to 10,000 ppm by mass

(9)' $Bi_2O_3$: 1 ppm by mass to 10,000 ppm by mass

(10)' PbO: 1 ppm by mass to 10,000 ppm by mass

(11)' $Ag_2O$: 1 ppm by mass to 10,000 ppm by mass

(12)' CuO: 1 ppm by mass to 10,000 ppm by mass

(13)' $WO_3$: 1 ppm by mass to 10,000 ppm by mass

(14)' $Nb_2O_5$: 1 ppm by mass to 10,000 ppm by mass

Specific examples of the glass-containing raw material as exemplified above include a raw material derived from a waste glass product, and a defective glass generated in a production process of a glass product. If necessary, a cullet obtained by subjecting a waste glass product or a defective glass to a treatment such as pulverization may be used as the glass-containing raw material. The kind of the glass product is not particularly limited, and examples thereof include an insulating glass, a laminated glass, a printed glass, a PV panel glass, a glass bottle, a glass wool, a fire-resistant glass, a heat-resistant glass, a glass used for devices such as smartphones, and a glass used for a liquid crystal display and the like. The raw material derived from such a glass product is likely to be a material mixed with an external foreign substance, or to be a material containing a coloring component or an unnecessary component, and is suitable as the glass-containing raw material in the present production method. In addition, it is preferable, from the viewpoint of resource recycling and greenhouse gas reduction, to use a waste glass product or a defective glass as the glass-containing raw material since the glass can be recycled. The glass-containing raw material may contain an additive and a glass raw material other than the waste glass product and the defective glass for the purpose of adjusting the composition of the glass to be obtained or adjusting a viscosity of the melt as described later.

From the viewpoint of efficient recycling, a content of the cullet in the glass-containing raw material is preferably 50 mass% or more, more preferably 60 mass% or more, still more preferably 70 mass% or more, and particularly preferably 80 mass% or more.

(Melting of Glass-containing Raw Material)

A specific method for melting the glass-containing raw material is not particularly limited. For example, the glass-containing raw material can be melted by charging the glass-containing raw material into a known heat-resistant container, heating furnace, or the like and raising the temperature to a temperature at which the reduction treatment in the step (ii) is performed, thereby obtaining the first melt.

(First Melt)

A viscosity of the first melt is preferably 0.1 dPa·s to 100,000 dPa·s at a temperature in the step (ii), that is, at a temperature during the reduction treatment. That is, the viscosity is preferably 100,000 dPa·s or less, more preferably 10,000 dPa·s or less, and still more preferably 1,000 dPa·s or less. When the viscosity is the above upper limit value or less, the reduction treatment in the step (ii) is easily performed. The lower limit value of the viscosity is not particularly limited, and is preferably 0.1 dPa·s or more from the viewpoint of preventing erosion of a refractory, for example. The viscosity of the first melt can be measured by using a rotating cylinder method, a ball pulling-up method, or the like.

From the above viewpoints, the present production method may further include adjusting the viscosity of the first melt to 0.1 dPa·s to 10,000 dPa·s. A more preferred range of the viscosity is the same as described above.

A method of adjusting the viscosity of the first melt is not particularly limited, and examples thereof include a method of adding a substance capable of adjusting the viscosity to the glass-containing raw material or the first melt. The substance that can be added to the glass-containing raw material or the first melt is not particularly limited, and examples thereof include a carbonate, a hydroxide, an oxide, a fluoride, and a chloride that contain an alkali metal element or an alkaline earth metal element when it is desired to relatively reduce the viscosity, and examples thereof include an oxide containing silicon, aluminum, boron, or phosphorus when it is desired to relatively increase the viscosity.

[Step (ii)]

In the step (ii), the first melt is subjected to a reduction treatment to precipitate a metal phase.

(Reduction Treatment)

A reduction treatment method is not particularly limited, and examples thereof include a method in which a reducing agent is used and a method in which the first melt is electrolyzed. From the viewpoint of ease of maintenance of equipment and reduction of power consumption, a method in which a reducing agent is used is preferred.

As the reducing agent in the reduction treatment, for example, at least one selected from the group consisting of a simple substance and a compound that contain at least one element selected from the group consisting of C, Al, Si, Ca, Ti, and H, and a mixture containing the simple substance and the compound can be preferably used from the viewpoint of availability.

Specific examples of the compound corresponding to these include C, Al, Si, Ca, Ti, $H_2$, CO, a Fe-Si alloy, a Ca-Si alloy, $CH_4$, $NH_3$, and a mixture containing these.

From the viewpoint of cost reduction, the reducing agent more preferably contains at least one selected from the group consisting of a simple substance and a compound that contain at least one element selected from the group consisting of C, Si, and H, and a mixture containing the simple substance and the compound, still more preferably contains at least one selected from the group consisting of C, Si, CO, a Fe-Si alloy, $H_2$, $NH_3$, and $CH_4$, and even more preferably contains C, Si, a Fe-Si alloy, $H_2$, and $NH_3$.

A state of the reducing agent is not particularly limited, and may be a gas or a solid at room temperature. In the case where the reducing agent is a solid, a shape thereof is not particularly limited, and may be, for example, a granular shape, a powder shape, a lump shape, or a plate shape.

As the reduction treatment method using the reducing agent, specifically, a treatment in which the reducing agent and the first melt are brought into contact with each other may be performed. Examples thereof include a method in which the first melt and the reducing agent are brought into contact with each other by adding a solid reducing agent to the first melt or blowing a gaseous reducing agent into the first melt, and a method in which the glass-containing raw material is melted in a container in which a reducing agent is disposed in advance to bring the obtained first melt into contact with the reducing agent. Note that, the container in which a reducing agent is disposed includes not only a case where the container includes the reducing agent therein but also a case where a part or all of the container itself acts as the reducing agent. In the case of melting the glass-containing raw material in a container in which a reducing agent is disposed in advance, the step (i) and the step (ii) are simultaneously performed.

From the viewpoint of ease of operation, preferred is a method in which the glass-containing raw material is melted in a container in which a reducing agent is disposed in advance.

In the case where the reducing agent is a granular or lumpy solid and the glass-containing raw material is melted in a container in which a reducing agent is disposed in advance, a size of the reducing agent occupying 80% or more of the whole on a mass basis is preferably 0.5 mm to 200 mm. The size of the reducing agent occupying 80% or more of the whole on a mass basis is more preferably 1 mm to 150 mm, and still more preferably 2 mm to 100 mm. Accordingly, the size of voids formed by the reducing agents can be made appropriate, and the entire melt can be efficiently reduced. The size and the ratio of the reducing agent can be evaluated by passing the reducing agent through a sieve having a predetermined opening and measuring the mass with a balance. Note that, a preferred range does not include a minute reducing agent generated by collision between the reducing agents during addition or conveyance or a reaction with the melt.

In the case where the reducing agent is a solid and the glass-containing raw material is melted in a container in which a reducing agent is disposed in advance, it is preferable to fill the container with the reducing agent at a filling rate of 20 vol% to 80 vol% and to bring the reducing agent into contact with the first melt. That is, the filling rate is preferably 20 vol% or more, more preferably 30 vol% or more, and still more preferably 40 vol% or more. On the other hand, the filling rate is preferably 80 vol% or less, more preferably 75 vol% or less, and still more preferably 70 vol% or less. Accordingly, the entire melt can be efficiently reduced. The filling rate of the reducing agent is obtained by calculation based on the mass of the reducing agent when a container having a certain volume is filled with the reducing agent and an apparent density of the reducing agent.

In the case where the reducing agent is a solid, a mass ratio of the reducing agent to the first melt is preferably 0.001 to 100. That is, from the viewpoint of making the effect of the reduction treatment sufficient, the mass ratio is preferably 0.001 or more, more preferably 0.005 or more, and still more preferably 0.01 or more. On the other hand, from the viewpoint of a space-saving treatment, the mass ratio is preferably 100 or less, more preferably 50 or less, and still more preferably 30 or less. The mass ratio of the reducing agent to the first melt is obtained based on an average composition and a charged amount of the melt and an average composition and a charged amount of the reducing agent. In the case of melting the glass-containing raw material in a container in which a reducing agent is disposed in advance, the reduction treatment can be performed as long as the reducing agent is not lost through a reaction with an oxidizing gas such as oxygen contained slightly in a melt or an atmosphere.

The reduction treatment method may be a method in which the first melt is electrolyzed, and this method and a method in which reducing agent is used may be used in combination. In the case of electrolyzing the first melt, for example, electrolysis can be performed by disposing two electrodes in the first melt and applying a voltage therebetween.

A treatment temperature in the reduction treatment is preferably 1,300°C to 1,800°C. That is, the treatment temperature is preferably 1,300°C or higher, more preferably 1,400°C or higher, and still more preferably 1,450°C or higher, from the viewpoint of obtaining a sufficient reduction reaction rate and reducing power. On the other hand, the treatment temperature is preferably 1,800°C or lower, more preferably 1,700°C or lower, and still more preferably 1,650°C or lower, from the viewpoint of preventing the erosion of the refractory and reducing the energy consumption amount.

A time of the reduction treatment is not particularly limited depending on the kind of the reducing agent, the composition of the first melt, and the like, and is preferably, for example, 10 minutes to 48 hours. That is, the treatment time is preferably 10 minutes or longer, more preferably 30 minutes or longer, and still more preferably 60 minutes or longer, from the viewpoint of allowing the reduction reaction to proceed sufficiently. On the other hand, the treatment time is preferably 48 hours or shorter, more preferably 24 hours or shorter, and still more preferably 12 hours or shorter, from the viewpoint of preventing the erosion of the refractory and reducing the energy consumption amount.

In the reduction treatment, it is preferable to selectively precipitate the impurity element in the first melt as a metal phase. Accordingly, a change between a main component of the glass in the glass-containing raw material and a main component of the glass to be obtained is reduced, and the recycling can be suitably performed while the useful component remains. In order to selectively precipitate the impurity element as a metal phase, it is preferable to appropriately adjust conditions such as the kind of the reducing agent and the treatment temperature in the reduction treatment. For example, by setting these to the preferred conditions described above, the impurity element in the first melt tends to be selectively precipitated as a metal phase.

(Metal Phase)

The metal element contained in the first melt is precipitated in the first melt as a metal phase by being subjected to the reduction treatment. The metal phase contains at least an element contained in the glass-containing raw material or contained in the first melt before the reduction treatment, and preferably contains the above impurity elements. More preferably, as a ratio of the impurity element in the metal phase increases, it can be said that the impurity element is selectively precipitated as the metal phase.

[Step (iii)]

In the step (iii), at least a part of the metal phase is separated from the first melt subjected to the reduction treatment to obtain a second melt. Here, separating at least a part of the metal phase from the first melt means physically removing at least a part of the metal phase from the first melt, and the second melt means a melt obtained by removing at least a part of the metal phase from the first melt.

The method of separating the metal phase is not particularly limited, and examples thereof include a method of separating the metal phase by depositing the metal phase precipitated in the first melt, and a method of separating the metal phase by converting the metal phase into a highly volatile substance with halogenation or the like and separating the metal phase as a gas. The deposition method is preferred from the viewpoint of ease of handling. Examples of a more preferred method of separating the metal phase include: a method in which the metal phase precipitated in the first melt is deposited by becoming coarse to a size sufficient to deposit fine metal particles with bubbling to thereby separate the metal phase; a method in which the metal phase is separated by bonding the metal phase and fine metal particles precipitated by intentionally adding a metal component such as silicon to become coarse metal phase to a size sufficient for deposition; a method by precipitating the metal phase on a surface of a reducing agent and capturing the metal phase on the surface of the reducing agent; and a method in which the metal phase is converted into a highly volatile substance with halogenation or the like to separate the metal phase as a gas. By separating the metal phase by these more preferred methods, the metal phase can be more suitably separated, and an amount of the metal phase remaining in the second melt can be more easily reduced. Note that, as a specific method capable of precipitating the metal phase on a surface of a reducing agent and capturing the metal phase on the surface of the reducing agent, a method of filling a container with the reducing agent in advance and melting the glass-containing raw material in the container to pass the first melt through the reducing agent is exemplified. The step (ii) and the step (iii) may simultaneously be performed.

[Step (iv)]

In the step (iv), the second melt is subjected to an oxidation treatment. As described above, even when the metal phase is separated from the melt in the step (iii), the metal phase having a relatively small particle diameter among the metal phase in a fine particle state remains in the melt, and the fine metal particles become defects in the glass to be obtained. Therefore, by performing the oxidation treatment on the second melt in the step (iv), defects derived from the fine metal particles in the glass to be obtained are reduced.

(Oxidation Treatment)

An oxidation treatment method is not particularly limited, and examples thereof include a method of using an oxidizing gas and a method of adding an oxidizing agent. The method using an oxidizing gas is preferred from the viewpoint that a composition of the melt is less likely to change.

Specific examples of the oxidizing gas include a gas containing $O_2$, a gas containing $H_2O$, and a gas containing $CO_2$. From the viewpoint of oxidation efficiency and the availability, a gas containing $O_2$ is preferred as the oxidizing gas. Examples of the gas containing $O_2$ include air (the atmosphere), an $O_2$ gas, and a mixed gas of an $O_2$ gas and an inert gas, and air (the atmosphere) and an $O_2$ gas are preferred from the viewpoint of the availability.

Specific examples of the method of performing the oxidation treatment using an oxidizing gas include a method of bubbling the second melt using the oxidizing gas. If necessary, an inert gas may be mixed with the oxidizing gas. Examples of the inert gas include a nitrogen gas, an argon gas, and a helium gas.

Specific examples of the oxidizing agent include nitrates such as sodium nitrate, sulfates such as sodium sulfate, cerium oxide, antimony (V) oxide, and tin (IV) oxide. From the viewpoint of the oxidation efficiency, the availability, and an environmental impact, nitrates, cerium oxide, and tin (IV) oxide are preferred.

Specific examples of the method of performing the oxidation treatment using the oxidizing agent include a method of adding the oxidizing agent to the second melt. The oxidizing agent is preferably in a powder form for an efficient reaction. The addition method is preferably a powder injection method for an efficient reaction.

A treatment temperature in the oxidation treatment is preferably 1,300°C to 1,800°C. That is, the treatment temperature is preferably 1,300°C or higher, more preferably 1,400°C or higher, and still more preferably 1,450°C or higher, from the viewpoint of obtaining a sufficient oxidation reaction rate. On the other hand, the treatment temperature is preferably 1,800°C or lower, more preferably 1,700°C or lower, and still more preferably 1,650°C or lower, from the viewpoint of preventing the erosion of the refractory and reducing the energy consumption amount.

An oxidation treatment time is not particularly limited, and in the case of bubbling using the oxidizing gas, for example, 1 minute to 24 hours is preferred. That is, the treatment time is preferably 1 minute or longer, more preferably 5 minutes or longer, and still more preferably 15 minutes or longer, from the viewpoint of sufficiently eliminating the fine metal particles. On the other hand, the treatment time is preferably 24 hours or shorter, more preferably 12 hours or shorter, and still more preferably 8 hours or shorter, from the viewpoint of preventing the erosion of the refractory and reducing the energy consumption amount.

With the method including the above steps (i) to (iv), a high quality glass in which impurity elements are removed from the glass-containing raw material can be produced. Note that, the present production method may include a known glass production step in addition to the steps (i) to (iv). For example, after the step (iv), a known glass composition adjustment step, forming step, annealing step, and the like may be included.

(Glass)

The glass to be obtained by the present production method preferably has a visible light transmittance Tv of 50% to 92%. The glass to be obtained by the present production method has relatively high transparency since the impurity elements including a coloring component and the like are removed. That is, the Tv is preferably 50% or more, more preferably 60% or more, and still more preferably 70% or more. The Tv is preferably as large as possible, and may be, for example, 92% or less.

In the present description, the visible light transmittance Tv refers to a value of the visible light transmittance Tv at a thickness of 2 mm measured based on JIS R3106:2019. A glass thicker than 2 mm can be subjected to the measurement by being polished to 2 mm by using a general method. A glass having a thickness of less than 2 mm can be subjected to the measurement by re-melting the glass in a general electric furnace to obtain a glass having a thickness of 2 mm or more, and then polishing the glass to 2 mm. Note that, in the case where the glass to be obtained is to be a colored glass, it is not prevented at all that intentional addition of a coloring component or the like is performed after the step (iv), and a glass having a relatively small visible light transmittance Tv is obtained by intentional addition of a coloring component or the like.

A difference ΔTv between a visible light transmittance Tv of the main glass contained in the glass-containing raw material and the visible light transmittance Tv of the glass to be obtained by the present production method is preferably 0% to 70%. In the case where the glass in the glass-containing raw material contains a coloring component, the visible light transmittance Tv thereof tends to decrease. Since the glass to be obtained by the present production method has relatively high transparency because the impurity elements including the coloring component and the like are removed, the ΔTv tends to increase. That is, the ΔTv is preferably 0% or more, more preferably 1.0% or more, and still more preferably 2.0% or more. The ΔTv is preferably as large as possible, and may be, for example, 70% or less. Note that, the main glass contained in the glass-containing raw material refers to a glass excluding the external foreign substance contained in the glass-containing raw material. In addition, the ΔTv means (the visible light transmittance Tv of the glass to be obtained) - (the visible light transmittance Tv of the main glass contained in the glass-containing raw material).

In the case where the above impurity elements, that is, at least one element selected from the group consisting of Fe, Co, Cr, Ni, Sb, Zn, Mn, Sn, Bi, Pb, Ag, Cu, W, and Nb are defined as an element M, and the glass-containing raw material contains the element M, the glass to be obtained by the present production method preferably satisfies the following.

That is, when a concentration of the element M in the glass-containing raw material in terms of mass% or ppm by mass based on oxides is defined as $[MO]_{before}$ and a concentration of the element M in the glass to be obtained in terms of mass% or ppm by mass based on oxides is defined as $[MO]_{after}$, a value of X represented by the following formula is preferably 0.01 to 0.85.

X = (total of ($[MO]_{after}/[MO]_{before}$) for each kind of element M contained in glass-containing raw material)/(number of kinds of elements M contained in glass-containing raw material)

Here, in calculating the value of X, an element whose content in the glass-containing raw material satisfies each of the following conditions (1) to (14) is defined as "the element M contained in the glass-containing raw material", the $[MO]_{arfter}/[MO]_{before}$ is obtained for each kind of the "element M contained in the glass-containing raw material", and a total thereof is defined as the "total of ($[MO]_{after}/[MO]_{before}$) for each kind of element M contained in glass-containing raw material". Specifically, for example, in the case where $Fe_2O_3$ is contained in an amount of 0.001 mass%, CoO is contained in an amount of 1 ppm by mass in terms of mass% based on oxides among the elements M, and the other elements are not contained, "the element M contained in the glass-containing raw material" is Fe and Co, and the "number of kinds of elements M contained in glass-containing raw material" is 2. In addition, $[Fe_2O_3]_{after}/[Fe_2O_3]_{before}$ and $[CoO]_{after}/[CoO]_{before}$ are obtained, and the total thereof is defined as the "total of ($[MO]_{after}/[MO]_{before}$) for each kind of the element M contained in glass-containing raw material".

(1) $Fe_2O_3$: 0.001 mass% or more
(2) CoO: 1 ppm by mass or more
(3) $Cr_2O_3$: 1 ppm by mass or more
(4) NiO: 1 ppm by mass or more
(5) $Sb_2O_3$: 1 ppm by mass or more
(6) ZnO: 1 ppm by mass or more
(7) MnO: 1 ppm by mass or more
(8) $SnO_2$: 1 ppm by mass or more
(9) $Bi_2O_3$: 1 ppm by mass or more
(10) PbO: 1 ppm by mass or more
(11) $Ag_2O$: 1 ppm by mass or more
(12) CuO: 1 ppm by mass or more
(13) $WO_3$: 1 ppm by mass or more
(14) $Nb_2O_5$: 1 ppm by mass or more

The value of X of 0.01 to 0.85 means that the impurity elements are appropriately removed in the glass to be obtained. From such a viewpoint, the value of X is preferably 0.85 or less, more preferably 0.80 or less, still more preferably 0.75 or less, and particularly preferably 0.60 or less. The value of X is preferably as small as possible. The lower limit is not particularly limited, and may be, for example, 0.01 or more.

One of the elements that are likely to be contained in the glass-containing raw material as the impurity element is Fe. In the case where the content of $Fe_2O_3$ in the glass-containing raw material is 0.001 mass% or more, the value of $[Fe_2O_3]_{after}/[Fe_2O_3]_{before}$ is preferably 0.85 or less, more preferably 0.80 or less, still more preferably 0.75 or less, and particularly preferably 0.60 or less. Accordingly, it can be said that the impurity elements are appropriately removed in the glass to be obtained. The value of $[Fe_2O_3]_{after}/[Fe_2O_3]_{before}$ is preferably as small as possible. The lower limit is not particularly limited, and may be, for example, 0.01 or more.

The glass to be obtained preferably has a concentration of $Fe_2O_3$ of 0.001% to 0.5% in terms of mass% based on oxides. Accordingly, it can be determined that the content of the impurity element, particularly the content of the Fe element, is relatively small in the obtained glass. The concentration of $Fe_2O_3$ is preferably 0.5% or less, more preferably 0.4% or less, and still more preferably 0.3% or less. On the other hand, the concentration of $Fe_2O_3$ is preferably as small as possible. The lower limit is not particularly limited, and may be, for example, 0.001% or more.

A ratio $NWF_{after/before}$ of a total content of a network former oxide in the glass to be obtained to a total content of the network former oxide in the glass-containing raw material is preferably 0.40 to 1.50 in terms of mass% based on oxides. That is, the $NWF_{after/before}$ is preferably 0.40 or more, more preferably 0.50 or more, and still more preferably 0.60 or more. On the other hand, the $NWF_{after/before}$ is preferably 1.50 or less, more preferably 1.30 or less, and still more preferably 1.20 or less. In addition, a ratio $NWM_{after/before}$ of a total content of a network modifier oxide in the glass to be obtained to a total content of the network modifier oxide in the glass-containing raw material is preferably 0.60 to 2.00. That is, the $NWM_{after/before}$ is preferably 0.60 or more, more preferably 0.70 or more, and still more preferably 0.80 or more. On the other hand, the $NWM_{after/before}$ is preferably 2.00 or less, more preferably 1.60 or less, and still more preferably 1.40 or less.

Both the network former oxide and the network modifier oxide constitute a main component of the glass. Therefore, the $NWF_{after/before}$ and the $NWM_{after/before}$ respectively falling within the above ranges means that a change between the main component of the glass in glass-containing raw material and the main component of the glass to be obtained is small. This means that the impurity element in the first melt is selectively precipitated as a metal phase to obtain a glass, and is preferred from the viewpoint that the recycling can be performed while maintaining useful components.

In the present description, the total content of the network former oxide means the total content of $SiO_2$, $Al_2O_3$, $B_2O_3$, and $P_2O_3$. The total content of the network modifier oxide means the total content of MgO, CaO, SrO, BaO, $Li_2O$, $Na_2O$, and $K_2O$.

The composition of the glass to be obtained by the present production method is not particularly limited, and may be, for example, a glass selected from the group consisting of a soda lime glass, an aluminosilicate glass, an alkali-free glass, and an alkali borosilicate glass. A soda lime glass is preferred from the viewpoint of the largest production amount in the world and large contribution to the resource recycling and the greenhouse gas reduction. Note that, the composition of the glass in the glass-containing raw material used in the present production method is not particularly limited, and may be the same as the composition of the glass to be obtained by the present production method except for the content of the impurity element.

In the case where the glass to be obtained by the present production method is a soda lime glass, the composition thereof preferably contains 50% to 85% in total of $SiO_2$ and $Al_2O_3$, 5% to 30% in total of alkaline earth metal oxides (RO), and 0.1% to 25% in total of alkali metal oxides ($R_2O$), in terms of mass% based on oxides. More preferably, it contains 60% to 80% of $SiO_2$, 5% to 20% of $Na_2O$, 0% to 15% of MgO, 5% to 20% of CaO, and 0% to 10% of $Al_2O_3$. In addition, $K_2O$ may be contained in an amount of less than 5%.

Hereinafter, an example of a preferred composition in the case where the glass to be obtained by the present production method is a soda lime glass is described more specifically. Note that, in the case where the glass composition is described as % or ppm, it means mass% based on oxides or ppm by mass based on oxides unless otherwise specified.

The total content of $SiO_2$ and $Al_2O_3$ is preferably 50% to 85%. The total content of $SiO_2$ and $Al_2O_3$ is preferably 50% or more since the glass can be stably present and weather resistance is improved. The total content of $SiO_2$ and $Al_2O_3$ is more preferably 55% or more, and still more preferably 60% or more. The total content of $SiO_2$ and $Al_2O_3$ is preferably 85% or less since a reduction reaction rate and an oxidation reaction rate are increased. The total content of $SiO_2$ and $Al_2O_3$ is more preferably 80% or less, and still more preferably 78% or less.

$SiO_2$ is a main component of the soda lime glass.

The content of $SiO_2$ is preferably 50% to 80%. The content of $SiO_2$ is preferably 50% or more since the weather resistance is improved. The content of $SiO_2$ is more preferably 60% or more, and still more preferably 65% or more. The content of $SiO_2$ is preferably 80% or less since devitrification is less likely to occur. The content of $SiO_2$ is more preferably 75% or less, and still more preferably 73% or less.

$Al_2O_3$ is a component that improves the weather resistance.

The content of $Al_2O_3$ is preferably 0% to 20%. When $Al_2O_3$ is contained, the weather resistance is improved. The content of $Al_2O_3$ is preferably 0% or more, more preferably 0.1% or more, still more preferably 0.5% or more, and particularly preferably 1% or more. The content of $Al_2O_3$ is more preferably 15% or less, and still more preferably 10% or less.

The total content of the alkaline earth metal oxides (RO) is preferably 5% to 30%. The total content of the alkaline earth metal oxides (RO) is preferably 5% or more since meltability is improved. The total content of the alkaline earth metal oxides (RO) is more preferably 7% or more, and still more preferably 10% or more. The total content of the alkaline earth metal oxides (RO) is preferably 30% or less since the devitrification is less likely to occur. The total content of the alkaline earth metal oxides (RO) is more preferably 25% or less, and still more preferably 20% or less. Here, the total content of the alkaline earth metal oxides (RO) means the total content of MgO, CaO, SrO, and BaO.

MgO is a component that promotes the melting of a glass raw materials and that improves the weather resistance.

The content of MgO is preferably 0% to 15%. When MgO is contained, the meltability and the weather resistance are improved. The content of MgO is preferably 0% or more, more preferably 1% or more, still more preferably 2% or more, and particularly preferably 4% or more. The content of MgO is preferably 15% or less since the devitrification is less likely to occur. The content of MgO is more preferably 10% or less, and still more preferably 5% or less.

CaO is a component that promotes the melting of the glass raw materials and that improves the weather resistance.

The content of CaO is preferably 5% to 20%. The content of CaO is preferably 5% or more since the meltability and the weather resistance are improved. The content of CaO is more preferably 6% or more, and still more preferably 7% or more. The content of CaO is preferably 20% or less since the devitrification is less likely to occur. The content of CaO is more preferably 15% or less, and still more preferably 12% or less.

The total content of the alkali metal oxides ($R_2O$) is preferably 0.1% to 25%. The total content of the alkali metal oxides ($R_2O$) is preferably 0.1% or more since the meltability is improved. The total content of the alkali metal oxides ($R_2O$) is more preferably 1% or more, still more preferably 3% or more, and particularly preferably 5% or more. The total content of the alkali metal oxides ($R_2O$) is preferably 25% or less since the weather resistance is improved. The total content of the alkali metal oxides ($R_2O$) is more preferably 20% or less, and still more preferably 15% or less. Here, the total content of the alkali metal oxides ($R_2O$) means the total content of $Li_2O$, $Na_2O$, and $K_2O$.

$Na_2O$ is a component that promotes the melting of the glass raw material.

The content of $Na_2O$ is preferably 0.1% to 25%. The content of $Na_2O$ is preferably 0.1% or more since the meltability is improved. The content of $Na_2O$ is more preferably 1% or more, still more preferably 3% or more, and particularly preferably 5% or more. The content of $Na_2O$ is preferably 25% or less since the weather resistance is improved. The content of $Na_2O$ is more preferably 20% or less, and still more preferably 15% or less.

$K_2O$ is a component that promotes the melting of the glass raw material.

$K_2O$ is not essential, but may be contained in an amount of less than 5%. That is, the content of $K_2O$ may be 0% or more and less than 5%. When $K_2O$ is contained, the meltability is improved. In the case where $K_2O$ is contained, the content thereof is preferably 0.01% or more, and more preferably 0.5% or more. The content of $K_2O$ is preferably less than 5% since the weather resistance is improved. The content of $K_2O$ is more preferably 3% or less, and still more preferably 2% or less.

The composition of the glass to be obtained by the present production method can be measured by performing composition analysis using X-ray fluorescence analysis. In addition, components having a content of less than 1% and light element components such as $Li_2O$ and $B_2O_3$ may be difficult to be quantified by X-ray fluorescence analysis, and the composition analysis may be performed by using an electron probe microanalyzer (EPMA), ICP optical emission spectrometry, or ICP mass spectrometry.

A shape of the glass to be obtained by the present production method is not particularly limited, and may be various shapes such as a block shape, a crushed piece shape, a container shape, a fiber shape, a bead shape, and a plate shape. In the case where the glass has a plate shape, the glass may have a flat plate shape or may be formed or bent to have a curved surface. In the case where the glass has a plate shape, a thickness is not particularly limited, and is preferably, for example, 0.1 mm to 20 mm.

(Application)

According to the present production method, a glass-containing raw material preferably containing a waste glass or a defective glass can be suitably recycled to produce a high quality glass. The glass to be obtained by the present production method can be used in various applications, and is preferably used as, for example, a glass for building materials, a glass for automobiles, a container glass, glass wool, a glass bead, and the like.

EXAMPLES

Hereinafter, the present invention is described in detail with reference to Examples, but the present invention is not limited thereto. Examples 1 to 14 and 20 to 33 are Working Examples, and Examples 15 to 19 and 34 to 37 are Comparative Examples.

(Glass-containing Raw Material)

Glasses A to L having compositions in mass% or ppm by mass base on oxides shown in Table 1 were prepared. In addition, stainless steel (SUS304), metal aluminum (Al), a polyvinyl butyral (PVB) resin, and a ceramic (pottery) were prepared as the external foreign substance. The glasses A to L and the external foreign substances were used in the combinations shown in Tables 2 and 3 to prepare glass-containing raw materials in Examples 1 to 37. In the case where the kind of the external foreign substance is described as "no", it means that each of the glasses A to L is used as it is as the glass-containing raw material. In Examples 30 to 37, a waste glass cullet containing a wide variety of kinds of external foreign substances was used as the glass-containing raw material.

(Example 1)

The glass A as a glass-containing raw material was charged into an alumina crucible and melted by raising the temperature to 1,500°C in an electric furnace under a nitrogen atmosphere to obtain a first melt. Using lumpy carbon (C) having a size shown in Table 2 as a reducing agent, a reduction treatment was performed by passing the first melt through the reducing agent disposed in advance in the alumina crucible so as to have a mass ratio of 0.4 and a filling rate of about 60 vol%, thereby precipitating a metal phase. In the reduction treatment, the treatment temperature was 1,500°C, and the treatment time was 120 minutes. With this treatment, the metal phase was precipitated on the surface of the reducing agent, and the metal phase was captured on the surface of the reducing agent. At the same time as the reduction treatment, the mixture was left to stand to deposit relatively large fine metal particles. Thereafter, the crucible was annealed, in order to separate the deposited fine metal particles, a bottom surface thereof was physically cut by 3 mm to 5 mm to separate at least a part of the metal phase, and the temperature was raised to obtain a second melt. Next, the second melt was subjected to an oxidation treatment by blowing air. In the oxidation treatment, the treatment temperature was 1,500°C, and the treatment time was 120 minutes. Thereafter, the second melt was annealed to obtain a glass in Example 1.

(Examples 2 to 10 and 13)

A glass in each example was obtained in the same manner as in Example 1 except that the conditions were changed as shown in Table 2.

(Example 11)

The glass A was used as a glass-containing raw material, powdery carbon (C) (< 0.074 mm) and silicon (Si) (< 0.3 mm) were mixed as a reducing agent at a mass ratio of 0.02 and 0.01, respectively, with respect to the mass of the glass A, the mixture was charged into an alumina crucible, the temperature was raised to 1,500°C in an electric furnace under a nitrogen atmosphere, then a $N_2$ gas was bubbled from the upper portion using an alumina pipe to obtain a first melt and a reduction treatment was performed simultaneously to precipitate a metal phase. The treatment time in the reduction treatment was 120 minutes. Thereafter, the mixture was left to stand for 120 minutes to deposit relatively large fine metal particles. Thereafter, the crucible was annealed, in order to separate the deposited fine metal particles, a bottom surface thereof was physically cut by 3 mm to 5 mm to separate at least a part of the metal phase, and the temperature was raised to obtain a second melt. Next, the second melt was subjected to an oxidation treatment by blowing air. In the oxidation treatment, the treatment temperature was 1,500°C, and the treatment time was 120 minutes. Thereafter, the second melt was annealed to obtain a glass in Example 11.

(Example 12)

A glass in Example 12 was obtained in the same manner as in Example 11 except that powdery silicon (Si) having a size shown in Table 2 was mixed as a reducing agent at a mass ratio of 0.03 with respect to the mass of the glass A.

(Example 14)

In Example 14, the glass B having a crushed piece shape prepared through a sieve having an opening of 5.6 mm was used as a glass-containing raw material, activated carbon having a size of 74 μm (0.074 mm) or less as a reducing agent was mixed thereto at a mass ratio of 0.03 with respect to the mass of the glass, the mixture was charged into an alumina crucible, the temperature was raised to 1,500°C in an electric furnace under a nitrogen atmosphere to obtain a first melt, and a reduction treatment was simultaneously performed to precipitate a metal phase. Except for this, a glass in Example 14 was obtained in the same manner as in Example 11.

(Examples 15 to 19)

A glass in each example was obtained in the same manner as in Example 1 except that the conditions were changed as shown in Table 2 and the following points were changed. In Example 15, after the second melt was obtained, the second melt was annealed without being subjected to an oxidation treatment to obtain a glass in Example 15. In Examples 16 to 19, after the first melt was obtained, the first melt was held in an alumina crucible at 1,500°C for 120 minutes and then annealed to obtain a glass in each example.

(Examples 20 to 29)

A glass in each example was obtained in the same manner as in Example 1 except that the conditions were changed as shown in Table 3.

(Examples 30 and 34)

In Examples 30 and 34, a black ceramic print (commonly known as black enamel), which was most difficult to recycle among automobile window glasses, and a waste glass cullet of a rear glass to which a large amount of heat wires adhered were used as the glass-containing raw material.

A glass in Example 30 was obtained in the same manner as in Example 1 and a glass in Example 34 was obtained in the same manner as in Examples 16 to 19, except that the conditions were changed as shown in Table 3.

Note that, when the waste glass cullet used as the glass-containing raw material was compared with the glass in Example 34, almost no weight reduction was observed, and therefore, almost no organic substance was contained. In addition, based on an adhesion area to the cullet, it is found that the total amount of the external foreign substance derived from the black enamel or the heat wire is less than 5,000 ppm.

(Examples 31 and 35)

In Examples 31 and 35, a fine waste glass cullet sieved to less than 5 mm, which was generated during sorting in a bottle glass recycling step, was used. A large amount of paper dust derived from the seal adhering to the bottle was contained.

A glass in Example 31 was obtained in the same manner as in Example 1, and a glass in Example 35 was obtained in the same manner as in Examples 16 to 19, except that after drying the waste glass cullet in a dryer at 80°C for 24 hours, the conditions were changed as shown in Table 3.

Note that, when the waste glass cullet used as the glass-containing raw material was compared with the glass in Example 35, the weight loss was 12,000 ppm, most of which is considered to be due to the paper dust. The total amount of other external foreign substances was not checked, but it was confirmed that a metal or ceramic foreign substance and bottle glasses of various colors were mixed. In addition, since PbO is contained according to the analytical value in Example 35, it is considered that a PbO-containing glass such as a crystal glass, which is difficult to visually recognize, is mixed.

(Examples 32 and 36)

In Examples 32 and 36, the waste glass cullet was used which had been sorted because it had been determined to be defective in a bottle glass recycling step, when a bottle glass sieved to 5 mm or more had been passed through an optical sorter. A large amount of ceramic or metal was contained.

A glass in Example 32 was obtained in the same manner as in Example 1, and a glass in Example 36 was obtained in the same manner as in Examples 16 to 19, except that after drying the waste glass cullet in a dryer at 80°C for 24 hours, the conditions were changed as shown in Table 3.

Note that, when the waste glass cullet used as the glass-containing raw material was compared with the glass in Example 36, the weight loss was 3,000 ppm, most of which is considered to be due to the paper dust. The total amount of other external foreign substances was not checked, but similar to Example 35, it was confirmed that a metal or ceramic foreign substance and bottle glasses of various colors were mixed, and it is considered that a PbO-containing glass such as a crystal glass is mixed.

(Examples 33 and 37)

In Examples 33 and 37, a fine waste glass cullet sieved to less than 5 mm, which was generated during sorting in a recycling step for an insulating glass as a kind of architectural window glass, was used. Aluminum derived from a spacer, zeolite used as the drying agent, a resin for adhering the spacer and the glass, and a sealing material were contained in a large amount.

A glass in Example 33 was obtained in the same manner as in Example 1, and a glass in Example 37 was obtained in the same manner as in Examples 16 to 19, except that after drying the waste glass cullet in a dryer at 80°C for 24 hours, the conditions were changed as shown in Table 3.

Note that, when the waste glass cullet used as the glass-containing raw material was compared with the glass in Example 37, the weight loss was 8,000 ppm, most of which is considered to be due to the adhesive resin and the sealing material. The total amount of other external foreign substances was not checked, but it was confirmed that a large amount of drying agent was mixed.

(Evaluation)

The obtained glasses in Examples 1 to 37 were evaluated by using the following methods. The results for Examples 1 to 19 are shown in Table 2, and the results for Examples 20 to 37 are shown in Table 3.

(Visible Light Transmittance Tv)

The visible light transmittance Tv was measured using a spectrophotometer (Model No. UH4100, manufactured by Hitachi High-Tech Science Corporation) based on JIS R3106:2019. The measurement was performed on the glass in each example and the glasses A to L. The $\Delta$Tv in the table represents a value of a difference obtained by subtracting the Tv of the main glass (glass excluding the external foreign substance in the case where the glass-containing raw material contains the external foreign substance) in the glass-containing raw material in each example from the Tv of the glass in each example. A sample having a thickness of 2 mm was used for the measurement.

(Composition and Impurity Element Concentration)

For the glass in each example and the glasses A to L, the composition and the impurity element concentration in terms of mass% or ppm by mass were measured as follows.
The concentrations of main components ($SiO_2$, $Al_2O_3$, $P_2O_3$, RO, and $R_2O$ in Examples) and $Fe_2O_3$ in the glass were measured by X-ray fluorescence analysis (model number ZSX PrimusII, manufactured by Rigaku Corporation). However, in the reduction treatment or the oxidation treatment, in the case where an alumina crucible or an alumina pipe was used, $Al_2O_3$ may be unintentionally dissolved in the glass to increase the concentration of $Al_2O_3$, and thus the concentration of $Al_2O_3$ in the glass after the treatment was calculated using the same value as the concentration of $Al_2O_3$ contained in the glass-containing raw material. Note that, in the scope of the present invention, it is found that there is no factor that affects the concentration of $Al_2O_3$ in the glass except for the factor that the alumina crucible or the alumina pipe is dissolved in the glass.
The concentrations of other trace components were measured by laser ablation-ICP mass spectrometry (LA-ICP-MS) (laser system: model number NWR213, manufactured by Japan Laser Corporation; ICP mass spectrometer: model number ELEMENT II, manufactured by Thermo Fisher Scientific K.K.). Note that, an example in which the analytical value was less than 1 ppm was described as "< 1" since the quantitation was low. In Examples 34 to 37, defects are generated and the glass was inhomogeneous, the measurement was performed twice by changing the position in each example so as to obtain a representative composition, and the average value thereof was used.

(Defects)

Whether a defect was generated in the obtained glass was visually checked. In the case where the defect was found, the composition was analyzed using scanning electron microscope-energy dispersive X-ray spectroscopy (SEM-EDX). In the case where the defect was found, the kind thereof is shown in Tables 2 and 3.
Note that, "FeSi" means that an alloy containing Fe and Si was observed in the glass. The alloy containing Fe and Si may contain other elements, and the content ratio is not necessarily constant. "NiS" means that generation of NiS was observed in the glass. NiS may contain other elements, and the content ratio is not necessarily constant. "Amber" means that amber coloring was observed in the glass, and "unmelted matter" means that unmelted components remained in the glass.

[Table 1]

| | Unit | Glass A | Glass B | Glass C | Glass D | Glass E | Glass F |
|---|---|---|---|---|---|---|---|
| $SiO_2$+$Al_2O_3$ | wt% | 72 | 74 | 72 | 74 | 73 | 74 |
| Total content of RO | wt% | 13 | 12 | 13 | 12 | 13 | 13 |
| Total content of $R_2O$ | wt% | 14 | 13 | 14 | 13 | 12 | 12 |
| $P_2O_5$ | wt% | - | - | - | - | - | - |
| $Fe_2O_3$ | wt% | 1.55 | 0.50 | 1.00 | 0.50 | 1.80 | 0.23 |
| CoO | ppm by wt | - | - | 230 | - | 100 | 140 |
| $Cr_2O_3$ | ppm by wt | - | - | 12 | - | 190 | - |
| NiO | ppm by wt | - | - | - | - | - | 880 |

(continued)

| | Unit | Glass A | Glass B | Glass C | Glass D | Glass E | Glass F |
|---|---|---|---|---|---|---|---|
| MnO | ppm by wt | - | - | - | - | - | - |
| Sb$_2$O$_3$ | ppm by wt | - | - | - | 1600 | - | - |
| ZnO | ppm by wt | - | - | - | - | - | - |
| PbO | ppm by wt | - | - | - | - | - | - |
| CuO | ppm by wt | - | - | - | - | - | - |
| Visible light transmittance Tv at thickness of 2 mm | % | 77.3 | 86.4 | 40.5 | 87.1 | 56.4 | 51.6 |

[Table 1] (continued)

| | Unit | Glass G | Glass H | Glass I | Glass J | Glass K | Glass L |
|---|---|---|---|---|---|---|---|
| SiO$_2$+Al$_2$O$_3$ | wt% | 73 | 76 | 76 | 82 | 84 | 83 |
| Total content of RO | wt% | 13 | 12 | 11 | 4 | 2 | - |
| Total content of R$_2$O | wt% | 14 | 12 | 12 | 13 | 11 | 10 |
| P$_2$O$_5$ | wt% | - | - | - | - | - | 5 |
| Fe$_2$O$_3$ | wt% | 0.01 | 0.5 | 0.1 | 0.6 | 0.6 | 0.6 |
| CoO | ppm by wt | - | - | 200 | - | - | - |
| Cr$_2$O$_3$ | ppm by wt | - | 900 | 1100 | - | - | - |
| NiO | ppm by wt | - | - | - | - | - | - |
| MnO | ppm by wt | - | - | 400 | - | - | - |
| Sb$_2$O$_3$ | ppm by wt | 1300 | - | - | - | - | - |
| ZnO | ppm by wt | - | 100 | - | - | - | - |
| PbO | ppm by wt | - | 200 | - | - | - | - |
| CuO | ppm by wt | - | - | 200 | - | - | - |
| Visible light transmittance Tv at thickness of 2 mm | % | 91.7 | 44.9 | 50.2 | 85.8 | 83.7 | 81.8 |

[Table 2]

| | Unit | Example 1 | Example 2 | Example 3 | Example 4 | Example 5 | Example 6 |
|---|---|---|---|---|---|---|---|
| **Glass-containing raw material** | | | | | | | |
| Kind of glass | - | A | B | C | D | E | F |
| Kind of external foreign substance | - | No | No | No | No | No | No |
| Amount of external foreign substance | ppm by wt | - | - | - | - | - | - |
| **Process** | | | | | | | |
| Viscosity at temperature in step (ii) | dPa·s | 65 | 65 | 65 | 65 | 65 | 65 |
| Temperature in step (ii) | °C | 1500 | 1500 | 1500 | 1500 | 1500 | 1500 |
| Kind of reducing agent | - | C | C | C | C | C | C |
| Size of reducing agent | mm | 3 to 10 | 3 to 10 | 3 to 10 | 3 to 10 | 3 to 10 | 3 to 10 |
| Temperature in step (iv) | °C | 1500 | 1500 | 1500 | 1500 | 1500 | 1500 |
| Kind of oxidizing agent | - | Air | Air | Air | Air | Air | Air |
| **Obtained glass** | | | | | | | |
| Visible light transmittance Tv at thickness of 2 mm | % | 89.2 | 91.2 | 89.8 | 89.5 | 88.7 | 80.7 |
| ΔTv (thickness: 2 mm) | % | 11.9 | 4.8 | 49.3 | 2.4 | 32.3 | 29.1 |
| $Fe_2O_3$ | wt% | 0.13 | 0.07 | 0.17 | 0.28 | 0.23 | 0.13 |
| CoO | ppm by wt | - | - | 6 | - | 13 | 48 |
| $Cr_2O_3$ | ppm by wt | - | - | 4 | - | 44 | - |
| NiO | ppm by wt | - | - | - | - | - | 235 |
| $Sb_2O_3$ | ppm by wt | - | - | - | 630 | - | - |
| X | - | 0.08 | 0.14 | 0.18 | 0.48 | 0.16 | 0.39 |
| NWF after | wt% | 74.9 | 75.6 | 72.3 | 73.0 | 74.3 | 75.3 |
| NWF after/before | - | 1.04 | 1.02 | 1.00 | 0.99 | 1.02 | 1.02 |
| NWM after | wt% | 25.0 | 24.2 | 26.4 | 26.4 | 25.4 | 24.5 |
| NWM after/before | - | 0.93 | 0.97 | 0.98 | 1.06 | 1.02 | 0.98 |
| Generation of defect | - | No | No | No | No | No | No |
| Kind of defect | - | No | No | No | No | No | No |

[Table 2] (continued)

| | Unit | Example 7 | Example 8 | Example 9 | Example 10 | Example 11 | Example 12 |
|---|---|---|---|---|---|---|---|
| **Glass-containing raw material** | | | | | | | |
| Kind of glass | - | B | B | B | B | A | A |

(continued)

| | Unit | Example 7 | Example 8 | Example 9 | Example 10 | Example 11 | Example 12 |
|---|---|---|---|---|---|---|---|
| **Glass-containing raw material** | | | | | | | |
| Kind of external foreign substance | - | SUS304 | Al | PVB | Pottery | No | No |
| Amount of external foreign substance | ppm by wt | 3000 | 3000 | 20000 | 10000 | - | - |
| **Process** | | | | | | | |
| Viscosity at temperature in step (ii) | dPa·s | 65 | 75 | 65 | 70 | 90 | 90 |
| Temperature in step (ii) | °C | 1500 | 1500 | 1500 | 1500 | 1500 | 1500 |
| Kind of reducing agent | - | C | C | C | C | C, Si | Si |
| Size of reducing agent | mm | 3 to 10 | 3 to 10 | 3 to 10 | 3 to 10 | < 0.074, < 0.3 | < 0.3 |
| Temperature in step (iv) | °C | 1500 | 1500 | 1500 | 1500 | 1500 | 1500 |
| Kind of oxidizing agent | - | Air | Air | Air | Air | Air | Air |
| **Obtained glass** | | | | | | | |
| Visible light transmittance Tv at thickness of 2 mm | % | 87.9 | 88.6 | 87.5 | 89.3 | 80.6 | 88.7 |
| ΔTv (thickness: 2 mm) | % | 1.5 | 2.2 | 1.1 | 2.9 | 3.3 | 11.4 |
| $Fe_2O_3$ | wt% | 0.25 | 0.19 | 0.24 | 0.24 | 0.31 | 0.06 |
| CoO | ppm by wt | - | - | - | - | - | - |
| $Cr_2O_3$ | ppm by wt | 80 | - | - | - | - | - |
| NiO | ppm by wt | 25 | - | - | - | - | - |
| $Sb_2O_3$ | ppm by wt | - | - | - | - | - | - |
| X | - | 0.16 | 0.38 | 0.48 | 0.48 | 0.20 | 0.04 |
| NWF after | wt% | 74.8 | 74.2 | 75.3 | 75.1 | 75.6 | 77.4 |
| NWF after/before | - | 1.01 | 1.00 | 1.02 | 1.01 | 1.05 | 1.08 |
| NWM after | wt% | 24.9 | 25.5 | 24.4 | 24.6 | 23.8 | 22.5 |
| NWM after/before | - | 1.00 | 1.02 | 0.98 | 0.98 | 0.88 | 0.83 |
| Generation of defect | - | No | No | No | No | No | No |
| Kind of defect | - | No | No | No | No | No | No |

[Table 2] (continued)

| | Unit | Example 13 | Example 14 | Example 15 | Example 16 | Example 17 | Example 18 | Example 19 |
|---|---|---|---|---|---|---|---|---|
| **Glass-containing raw material** | | | | | | | | |
| Kind of glass | - | B | B | A | B | B | B | B |
| Kind of external foreign substance | - | No | No | No | SUS304 | Al | PVB | Ceramics |
| Amount of external foreign substance | ppm by wt | - | - | - | 1000 | 1000 | 10000 | 5000 |
| **Process** | | | | | | | | |
| Viscosity at temperature in step (ii) | dPa·s | 210 | 65 | 65 | 65 | 65 | 65 | 70 |
| Temperature in step (ii) | °C | 1350 | 1500 | 1500 | 1500 | 1500 | 1500 | 1500 |
| Kind of reducing agent | - | C | C | C | No | No | No | No |
| Size of reducing agent | mm | 3 to 10 | < 0.074 | 3 to 10 | - | - | - | - |
| Temperature in step (iv) | °C | 1500 | 1500 | No | No | No | No | No |
| Kind of oxidizing agent | - | Air | Air | No | No | No | No | No |
| **Obtained glass** | | | | | | | | |
| Visible light transmittance Tv at thickness of 2 mm | % | 88.3 | 87.0 | 15.8 | Not measured | Not measured | Not measured | Not measured |
| $\Delta$Tv (thickness: 2 mm) | % | 1.9 | 0.6 | -61.5 | - | - | - | - |
| $Fe_2O_3$ | wt% | 0.38 | 0.45 | 0.12 | 0.68 | 0.45 | 0.55 | 0.56 |
| CoO | ppm by wt | - | - | - | - | - | - | - |
| $Cr_2O_3$ | ppm by wt | - | - | - | 260 | - | - | - |
| NiO | ppm by wt | - | - | - | 100 | - | - | - |
| $Sb_2O_3$ | ppm by wt | - | - | - | - | - | - | - |
| X | - | 0.76 | 0.90 | 0.08 | 1.03 | 0.90 | 1.10 | 1.12 |
| NWF after | wt% | 75.8 | 75.7 | 75.9 | 74.5 | 74.4 | 74.4 | 74.5 |

(continued)

| Obtained glass | | | | | | | | |
|---|---|---|---|---|---|---|---|---|
| NWF after/-before | - | 1.02 | 1.02 | 1.05 | 1.01 | 1.01 | 1.01 | 1.01 |
| NWM after | wt% | 23.8 | 23.9 | 23.7 | 24.8 | 25.1 | 25.0 | 24.8 |
| NWM after/-before | - | 0.95 | 0.96 | 0.88 | 0.99 | 1.00 | 1.00 | 0.99 |
| Generation of defect | - | No | No | Yes | Yes | Yes | Yes | Yes |
| Kind of defect | - | No | No | FeS | NiS | FeSi, amber | Amber | Unmelted matter |

[Table 3]

| | Unit | Example 20 | Example 21 | Example 22 | Example 23 | Example 24 | Example 25 |
|---|---|---|---|---|---|---|---|
| **Glass-containing raw material** | | | | | | | |
| Kind of glass | - | A | B | E | F | G | H |
| Kind of external foreign substance | - | No | No | No | No | No | No |
| Amount of external foreign substance | ppm by wt | - | - | - | - | - | - |
| **Process** | | | | | | | |
| Viscosity at temperature in step (ii) | dPa·s | 45 | 45 | 45 | 45 | 45 | 50 |
| Temperature in step (ii) | °C | 1550 | 1550 | 1550 | 1550 | 1550 | 1550 |
| Kind of reducing agent | - | C | C | C | C | C | C |
| Size of reducing agent | mm | 3 to 10 | 3 to 10 | 3 to 10 | 3 to 10 | 3 to 10 | 3 to 10 |
| Temperature in step (iv) | °C | 1500 | 1500 | 1500 | 1500 | 1500 | 1500 |
| Kind of oxidizing agent | - | Air | Air | Air | Air | Air | Air |
| **Obtained glass** | | | | | | | |
| Visible light transmittance Tv at thickness of 2 mm | % | 91.4 | 91.1 | 91.2 | 91.3 | 91.8 | 88.5 |
| ΔTv (thickness: 2 mm) | % | 14.1 | 4.7 | 34.8 | 39.7 | 0.1 | 43.6 |
| $Fe_2O_3$ | wt% | 0.04 | 0.04 | 0.01 | 0.01 | 0.01 | 0.03 |
| CoO | ppm by wt | - | - | < 1 | 3 | - | - |
| $Cr_2O_3$ | ppm by wt | - | - | 19 | - | - | 92 |
| NiO | ppm by wt | - | - | - | 2 | - | - |
| MnO | ppm by wt | - | - | - | - | - | - |
| $Sb_2O_3$ | ppm by wt | - | - | - | - | 30 | - |

(continued)

| Obtained glass | | | | | | | |
|---|---|---|---|---|---|---|---|
| ZnO | ppm by wt | - | - | - | - | - | 5 |
| PbO | ppm by wt | - | - | - | - | - | < 1 |
| CuO | ppm by wt | - | - | - | - | - | - |
| AgO | ppm by wt | - | - | - | - | - | - |
| $Bi_2O_3$ | ppm by wt | - | - | - | - | - | - |
| X | - | 0.03 | 0.08 | 0.04 | 0.02 | 0.51 | 0.05 |
| NWF after | wt% | 73.9 | 73.6 | 74.9 | 75.1 | 74.9 | 75.1 |
| NWF after/before | - | 1.03 | 0.99 | 1.03 | 1.01 | 1.03 | 0.99 |
| NWM after | wt% | 26.0 | 26.3 | 25.1 | 24.9 | 25.1 | 24.9 |
| NWM after/before | - | 0.96 | 1.05 | 1.00 | 1.00 | 0.93 | 1.04 |
| Generation of defect | - | No | No | No | No | No | No |
| Kind of defect | - | No | No | No | No | No | No |

[Table 3] (continued)

| | Unit | Example 26 | Example 27 | Example 28 | Example 29 | Example 30 | Example 31 |
|---|---|---|---|---|---|---|---|
| **Glass-containing raw material** | | | | | | | |
| Kind of glass | - | I | J | K | L | Waste glass cullet | Waste glass cullet |
| Kind of external foreign substance | - | No | No | No | No | Wide variety | Wide variety |
| Amount of external foreign substance | ppm by wt | - | - | - | - | - | - |
| **Process** | | | | | | | |
| Viscosity at temperature in step (ii) | dPa·s | 55 | 370 | 200 | 1000 | 60 | 65 |
| Temperature in step (ii) | °C | 1550 | 1500 | 1500 | 1500 | 1500 | 1500 |
| Kind of reducing agent | - | C | C | C | C | C | C |
| Size of reducing agent | mm | 3 to 10 | 3 to 10 | 3 to 10 | 3 to 10 | 3 to 10 | 3 to 10 |
| Temperature in step (iv) | °C | 1500 | 1500 | 1500 | 1500 | 1500 | 1500 |
| Kind of oxidizing agent | - | Air | Air | Air | Air | Air | Air |
| **Obtained glass** | | | | | | | |
| Visible light transmittance Tv at thickness of 2 mm | % | 87.2 | 86.5 | 89.5 | 88.9 | 88.7 | 90.5 |
| ΔTv (thickness: 2 mm) | % | 37.0 | 0.7 | 5.8 | 7.1 | - | - |

(continued)

| Obtained glass | | | | | | | |
|---|---|---|---|---|---|---|---|
| $Fe_2O_3$ | wt% | 0.03 | 0.39 | 0.24 | 0.35 | 0.15 | 0.05 |
| CoO | ppm by wt | 19 | - | - | - | 11 | - |
| $Cr_2O_3$ | ppm by wt | 125 | - | - | - | 52 | 35 |
| NiO | ppm by wt | - | - | - | - | - | - |
| MnO | ppm by wt | 196 | - | - | - | 117 | - |
| $Sb_2O_3$ | ppm by wt | - | - | - | - | - | - |
| ZnO | ppm by wt | - | - | - | - | - | - |
| PbO | ppm by wt | - | - | - | - | - | < 1 |
| CuO | ppm by wt | < 1 | - | - | - | 4 | - |
| AgO | ppm by wt | - | - | - | - | 1 | - |
| $Bi_2O_3$ | ppm by wt | - | - | - | - | 50 | - |
| X | - | 0.20 | 0.65 | 0.40 | 0.58 | 0.20 | 0.44 |
| NWF after | wt% | 74.7 | 84.0 | 84.1 | 87.3 | 72.6 | 75.0 |
| NWF after/before | - | 0.98 | 1.02 | 1.00 | 0.99 | 1.03 | 1.02 |
| NWM after | wt% | 25.2 | 15.3 | 13.5 | 10.2 | 26.4 | 24.9 |
| NWM after/before | - | 1.10 | 0.90 | 1.04 | 1.02 | 0.97 | 0.95 |
| Generation of defect | - | No | No | No | No | No | No |
| Kind of defect | - | No | No | No | No | No | No |

[Table 3] (continued)

| | Unit | Example 32 | Example 33 | Example 34 | Example 35 | Example 36 | Example 37 |
|---|---|---|---|---|---|---|---|
| **Glass-containing raw material** | | | | | | | |
| Kind of glass | - | Waste glass cullet | Waste glass cullet | Waste glass cullet | Waste glass cullet | Waste glass cullet | Waste glass cullet |
| Kind of external foreign substance | | Wide variety | Wide variety | Wide variety | Wide variety | Wide variety | Wide variety |
| Amount of external foreign substance | ppm by wt | - | - | - | - | - | - |
| **Process** | | | | | | | |
| Viscosity at temperature in step (ii) | dPa·s | 65 | 65 | 60 | 65 | 65 | 65 |

(continued)

| Process | | | | | | | |
|---|---|---|---|---|---|---|---|
| Temperature in step (ii) | °C | 1500 | 1500 | 1500 | 1500 | 1500 | 1500 |
| Kind of reducing agent | - | C | C | No | No | No | No |
| Size of reducing agent | mm | 3 to 10 | 3 to 10 | - | - | - | - |
| Temperature in step (iv) | °C | 1500 | 1500 | No | No | No | No |
| Kind of oxidizing agent | - | Air | Air | No | No | No | No |
| **Obtained glass** | | | | | | | |
| Visible light transmittance Tv at thickness of 2 mm | % | 91.0 | 90.5 | Not measured | Not measured | Not measured | Not measured |
| ΔTv (thickness: 2 mm) | % | - | - | - | - | - | - |
| $Fe_2O_3$ | wt% | 0.04 | 0.07 | 0.89 | 0.12 | 0.06 | 0.30 |
| CoO | ppm by wt | - | - | 140 | - | - | - |
| $Cr_2O_3$ | ppm by wt | 10 | - | 160 | 39 | 11 | - |
| NiO | ppm by wt | - | - | - | - | - | - |
| MnO | ppm by wt | - | - | 182 | - | - | - |
| $Sb_2O_3$ | ppm by wt | - | - | - | - | - | - |
| ZnO | ppm by wt | - | - | - | - | - | - |
| PbO | ppm by wt | < 1 | - | - | 180 | 70 | - |
| CuO | ppm by wt | - | - | 130 | - | - | - |
| AgO | ppm by wt | - | - | 80 | - | - | - |
| $Bi_2O_3$ | ppm by wt | - | - | 400 | - | - | - |
| X | - | 0.53 | 0.23 | - | - | - | - |
| NWF after | wt% | 75.4 | 74.7 | 70.6 | 73.4 | 74.1 | 73.5 |
| NWF after/before | - | 1.02 | 1.02 | - | - | - | - |
| NWM after | wt% | 24.6 | 25.0 | 27.1 | 26.3 | 26.0 | 26.7 |
| NWM after/before | - | 0.95 | 0.94 | - | - | - | - |
| Generation of defect | - | No | No | Yes | Yes | Yes | Yes |

(continued)

| Obtained glass | | | | | | | |
|---|---|---|---|---|---|---|---|
| Kind of defect | - | No | No | Ag particles, unmelted matter | Amber, unmelted matter | Amber, unmelted matter | Amber, FeSi, unmelted matter |

As shown in Tables 2 and 3, according to the methods in Examples 1 to 14 and 20 to 33, which are Working Examples, a high quality glass having few defects in production and reduced unnecessary coloring can be produced from various glass-containing raw materials containing impurity elements and external foreign substances. On the other hand, in the method in Example 15, although the concentration of the impurity element ($Fe_2O_3$) can be reduced to the same level as in Example 1 by performing the reduction treatment, defects and unnecessary coloring are observed in the obtained glass, and the visible light transmittance Tv is significantly lower than that of the original glass A. This is thought to be because the metal phase in a fine particle state remains in the obtained glass since the oxidation treatment was not performed.

In Example 14, no defect in production is generated in the obtained glass, and coloring is reduced as compared with the glass B used as the glass-containing raw material, but the value of X is relatively large, and the reduction amount of the impurity element ($Fe_2O_3$) is inferior to that in Examples 1 to 13. It is thought to be because the deposition rate was slow and the separation amount of the metal phase was relatively small since most of the fine metal particles generated during the reduction treatment were small. On the other hand, in Examples 1 to 13, since the method of separating the metal phase is a more suitable method, it is thought that the amount of the metal phase remaining in the second melt can be further reduced.

In Examples 20 to 26, by setting the temperature in the step (ii) to 1,550°C, the reduction amount of the concentration of the impurity elements ($Fe_2O_3$ and other trace components) has a more excellent result than that in Examples 1 to 13 in which the temperature in the step (ii) is set to 1,500°C, and it is thought to be because the reduction reaction is promoted by increasing the temperature in the step (ii).

In Examples 22, 25, 26, 31, and 32, a part of the trace components contained in the glass-containing raw material are reduced to less than 1 ppm, and the value of X is calculated assuming that the corresponding component was 1 ppm. In Examples 30 to 33, as the values of the $NWF_{before}$, the $NWM_{before}$, and the $[MO]_{before}$ for calculating the value of X, the values of the $NWF_{after}$, the $NWM_{after}$, and the $[MO]_{after}$ in Examples 34 to 37 are used respectively.

The glasses J to L as the glass-containing raw materials used in Examples 27 to 29 are each an aluminosilicate glass used for a cover glass of smartphones and the like. In Examples 27 to 29, the viscosity of the first melt at the temperature in the step (ii) is higher than that in Examples 1 to 6 in which the glasses A to F are used as the glass-containing raw materials. In the glasses in Examples 27 to 29, the value of X is relatively large, and when the reduction amount of the impurity element ($Fe_2O_3$) is compared, the glasses tend to be generally inferior to that in Examples 1 to 6.

In addition, defects and unnecessary coloring are observed in the glasses obtained by the methods in Examples 16 to 19 and 34 to 37 in which the reduction treatment is not performed, resulting in a poor quality. Note that, the glasses in Examples 16 to 19 and 34 to 37 were not subjected to the measurement of the visible light transmittance since coloring and defects were partially generated in visual observation and a homogeneous glass cannot be obtained.

As described above, the following matters are disclosed in the present description.

1. A glass production method for obtaining a glass from a glass-containing raw material, the method including:

obtaining a first melt by melting the glass-containing raw material;
precipitating a metal phase by subjecting the first melt to a reduction treatment;
obtaining a second melt by separating at least a part of the metal phase from the first melt; and
subjecting the second melt to an oxidation treatment.

2. The glass production method according to the above 1, in which in the reduction treatment, at least one selected from the group consisting of a simple substance and a compound that contain at least one element selected from the group consisting of C, Al, Si, Ca, Ti, and H, and a mixture containing the simple substance and the compound is used as a reducing agent.

3. The glass production method according to the above 2, in which the reducing agent contains at least one selected from the group consisting of a simple substance and a compound that contain at least one element selected from the group consisting of C, Si, and H, and a mixture containing the simple substance and the compound.

4. The glass production method according to any one of the above 1 to 3, in which a treatment temperature in the reduction treatment is 1,300°C to 1,800°C.

5. The glass production method according to any one of the above 1 to 4, in which an oxidizing gas is used as an oxidizing agent in the oxidation treatment.

6. The glass production method according to the above 5, in which a gas containing $O_2$ is used as the oxidizing agent.

7. The glass production method according to any one of the above 1 to 6, further including:

adjusting a viscosity of the first melt at a temperature in the reduction treatment to 0.1 dPa·s to 100,000 dPa·s.

8. The glass production method according to any one of the above 1 to 7, in which a glass to be obtained has a visible light transmittance Tv of 50% to 92% at a thickness of 2 mm.

9. The glass production method according to any one of the above 1 to 8, in which

the glass-containing raw material contains at least one element M selected from the group consisting of Fe, Co, Cr, Ni, Sb, Zn, Mn, Sn, Bi, Pb, Ag, Cu, W, and Nb, and
when a concentration of the element M in the glass-containing raw material in terms of mass% or ppm by mass based on oxides is defined as $[MO]_{before}$ and a concentration of the element M in a glass to be obtained in terms of mass% or ppm by mass based on oxides is defined as $[MO]_{after}$, a value of X represented by the following formula is 0.01 to 0.85,

X = (total of ($[MO]_{after}/[MO]_{before}$) for each kind of element M contained in glass-containing raw material)/ (number of kinds of elements M contained in glass-containing raw material).

10. The glass production method according to any one of the above 1 to 9, in which a glass to be obtained has a concentration of $Fe_2O_3$ of 0.001% to 0.5% in terms of mass% based on oxides.

11. The glass production method according to any one of the above 1 to 10, in which

in terms of mass% based on oxides,
a ratio $NWF_{after/before}$ is 0.40 to 1.50, the ratio $NWF_{after/before}$ being a ratio of a total content of a network former oxide in a glass to be obtained to a total content of the network former oxide in the glass-containing raw material, and
a ratio $NWM_{after/before}$ is 0.60 to 2.00, the ratio $NWM_{after/before}$ being a ratio of a total content of a network modifier oxide in the glass to be obtained to a total content of the network modifier oxide in the glass-containing raw material.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-037656) filed on March 10, 2023, the contents of which are incorporated herein by reference.

**Claims**

1. A glass production method for obtaining a glass from a glass-containing raw material, the method comprising:

    obtaining a first melt by melting the glass-containing raw material;
    precipitating a metal phase by subjecting the first melt to a reduction treatment;
    obtaining a second melt by separating at least a part of the metal phase from the first melt; and
    subjecting the second melt to an oxidation treatment.

2. The glass production method according to claim 1, wherein in the reduction treatment, at least one selected from the group consisting of a simple substance and a compound that contain at least one element selected from the group consisting of C, Al, Si, Ca, Ti, and H, and a mixture containing the simple substance and the compound is used as a reducing agent.

3. The glass production method according to claim 2, wherein the reducing agent contains at least one selected from the group consisting of a simple substance and a compound that contain at least one element selected from the group consisting of C, Si, and H, and a mixture containing the simple substance and the compound.

4. The glass production method according to claim 1, wherein a treatment temperature in the reduction treatment is 1,300°C to 1,800°C.

5. The glass production method according to claim 1, wherein an oxidizing gas is used as an oxidizing agent in the oxidation treatment.

6. The glass production method according to claim 5, wherein a gas containing $O_2$ is used as the oxidizing agent.

7. The glass production method according to claim 1, further comprising:
adjusting a viscosity of the first melt at a temperature in the reduction treatment to 0.1 dPa·s to 100,000 dPa·s.

8. The glass production method according to claim 1, wherein a glass to be obtained has a visible light transmittance Tv of 50% to 92% at a thickness of 2 mm.

9. The glass production method according to claim 1, wherein

the glass-containing raw material contains at least one element M selected from the group consisting of Fe, Co, Cr, Ni, Sb, Zn, Mn, Sn, Bi, Pb, Ag, Cu, W, and Nb, and
when a concentration of the element M in the glass-containing raw material in terms of mass% or ppm by mass based on oxides is defined as $[MO]_{before}$ and a concentration of the element M in a glass to be obtained in terms of mass% or ppm by mass based on oxides is defined as $[MO]_{after}$, a value of X represented by the following formula is 0.01 to 0.85,

X = (total of ($[MO]_{after}/[MO]_{before}$) for each kind of element M contained in glass-containing raw material)/ (number of kinds of elements M contained in glass-containing raw material).

10. The glass production method according to claim 1, wherein a glass to be obtained has a concentration of $Fe_2O_3$ of 0.001% to 0.5% in terms of mass% based on oxides.

11. The glass production method according to claim 1, wherein

in terms of mass% based on oxides,
a ratio $NWF_{after/before}$ is 0.40 to 1.50, the ratio $NWF_{after/before}$ being a ratio of a total content of a network former oxide in a glass to be obtained to a total content of the network former oxide in the glass-containing raw material, and
a ratio $NWM_{after/before}$ is 0.60 to 2.00, the ratio $NWM_{after/before}$ being a ratio of a total content of a network modifier oxide in the glass to be obtained to a total content of the network modifier oxide in the glass-containing raw material.

## INTERNATIONAL SEARCH REPORT

| International application No. |
|---|
| **PCT/JP2024/008897** |

### A. CLASSIFICATION OF SUBJECT MATTER

*C03C 1/02*(2006.01)i; *C03B 3/02*(2006.01)i
FI:   C03C1/02; C03B3/02

According to International Patent Classification (IPC) or to both national classification and IPC

### B. FIELDS SEARCHED

Minimum documentation searched (classification system followed by classification symbols)

C03C1/02; C03B3/02; B09B1/00-5/00; B09C1/00-1/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2012-239945 A (HOKKAIDO RESEARCH ORGANIZATION) 10 December 2012 (2012-12-10)<br>entire text, all drawings | 1-11 |
| A | WO 2013/118695 A1 (TOTTORI PREFECTURE) 15 August 2013 (2013-08-15)<br>entire text, all drawings | 1-11 |
| A | JP 7-96264 A (NKK CORP.) 11 April 1995 (1995-04-11)<br>entire text, all drawings | 1-11 |
| A | WO 2022/112723 A1 (SAINT-GOBAIN ISOVER) 02 June 2022 (2022-06-02)<br>entire text, all drawings | 1-11 |
| A | WO 03/024879 A1 (JAPAN SCIENCE AND TECHNOLOGY CORPORATION) 27 March 2003 (2003-03-27)<br>entire text, all drawings | 1-11 |

☐ Further documents are listed in the continuation of Box C.        ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/008897**

| Patent document cited in search report | | | Publication date (day/month/year) | Patent family member(s) | | | Publication date (day/month/year) |
|---|---|---|---|---|---|---|---|
| JP | 2012-239945 | A | 10 December 2012 | (Family: none) | | | |
| WO | 2013/118695 | A1 | 15 August 2013 | EP | 2813297 | A1 | |
| | | | | KR | 10-2014-0114070 | A | |
| JP | 7-96264 | A | 11 April 1995 | (Family: none) | | | |
| WO | 2022/112723 | A1 | 02 June 2022 | EP | 4251576 | A1 | |
| | | | | FR | 3116815 | A1 | |
| | | | | CA | 3197814 | A | |
| | | | | CN | 116529213 | A | |
| | | | | KR | 10-2023-0109147 | A | |
| | | | | AU | 2021386501 | A | |
| WO | 03/024879 | A1 | 27 March 2003 | JP | 4325856 | B2 | |
| | | | | US | 2005/0028556 | A1 | |
| | | | | EP | 1440951 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023037656 A

**Non-patent literature cited in the description**

- Material Recycling of Municipal Waste Slags by Using Phase Separation of Glass. **TAKUYA IM-AOKA**. Journal of The Faculty of Environmental Science and Technology. Okayama University, 2007, vol. 12, 161-165